# EUROPEAN PATENT APPLICATION

(11) **EP 4 823 071 A1**
(43) Date of publication of application: **14.10.2026**
(21) Application number: 24911140.2
(22) Date of filing: 24.12.2024
(51) Int. Cl.: H04L 67/1095

(54) **FILE ATTRIBUTE SETTING METHOD, CLIENT, STORAGE SERVER, DEVICE, AND SYSTEM**

(30) Priority: 27.12.2023 CN 202311834432
(71) Applicant: Huawei Technologies Co., Ltd., Shenzhen, Guangdong 518129 (CN)
(72) Inventor: ZHANG, Mingqian, Shenzhen, Guangdong 518129 (CN); YANG, Jing, Shenzhen, Guangdong 518129 (CN); MENG, Kai, Shenzhen, Guangdong 518129 (CN)
(74) Representative: Epping - Hermann - Fischer
(86) International application number: PCT/CN2024/141978
(87) International publication number: WO 2025/140215

(57) **Abstract**

A file attribute setting method, a client, a storage server, a device, and a system are disclosed, relating to the computer field. The method includes: The client sends a setting request to the storage server, and the storage server sets file attributes of a plurality of files. The client receives a setting response, where the setting response indicates a setting result for the file attributes of the plurality of files based on the setting request. In this manner, the client does not need to send a plurality of file attribute setting commands, and the file attributes of the plurality of files can be set through a single setting command, thereby enabling batch file attribute setting, reducing a quantity of setting commands transmitted between the client and the storage server, reducing consumption of network resources, and improving file attribute setting efficiency. In addition, the client does not need to send a Readdir command to obtain a file list, store the file list, or traverse the file list to send a setting command for each file, thus reducing consumption of storage resources and computing resources of the client.

## Description

This application claims priority to Chinese Patent Application No. 202311834432.8, filed with the China National Intellectual Property Administration on December 27, 2023 and entitled "FILE ATTRIBUTE SETTING METHOD, CLIENT, STORAGE SERVER, DEVICE, AND SYSTEM", which is incorporated herein by reference in its entirety.

### TECHNICAL FIELD

This application relates to the computer field, and in particular, to a file attribute setting method, a client, a storage server, a device, and a system.

### BACKGROUND

Currently, a client may mount shared files of a storage server, and remotely access the shared files of the storage server through a network. The client may perform operations such as attribute query and attribute setting on the file. Usually, the client sends a Readdir command to the storage server to obtain a file list, and then the client performs operations such as attribute query and attribute setting on each file. As a quantity of files increases, the amount of data transmitted between the client and the storage server increases accordingly, consuming a large quantity of network resources and causing low file attribute setting efficiency. In addition, in multi-level directory and large-scale directory scenarios, because the client caches the file list and traverses the file list, a large quantity of storage resources and computing resources of the client are consumed.

### SUMMARY

This application provides a file attribute setting method, a client, a storage server, a device, and a system, to improve file attribute setting efficiency and reduce consumption of network resources, storage resources, and computing resources of the client.

According to a first aspect, a file attribute setting method is provided, where the method is performed by a client. The method includes: The client sends a setting request to a storage server, to indicate the storage server to set file attributes of a plurality of files, and then receives a setting response, where the setting response indicates a setting result for the file attributes of the plurality of files based on the setting request.

In comparison with a case that a file attribute of only one file can be set through a single setting command, when the file attributes of the plurality of files are to be set, a plurality of setting commands need to be sent, consuming a large quantity of network resources and reducing file attribute setting efficiency. According to the solution provided in this application, the client does not need to send a plurality of file attribute setting commands, and the file attributes of the plurality of files can be set through a single setting command, thereby enabling batch file attribute setting, reducing a quantity of setting commands transmitted between the client and the storage server, reducing consumption of network resources, and improving file attribute setting efficiency. In addition, the client does not need to send a Readdir command to obtain a file list, store the file list, or traverse the file list to send a setting command for each file, thus reducing consumption of storage resources and computing resources of the client.

In a possible implementation, the setting request includes a recursively setting parameter, and the recursively setting parameter indicates to set a file attribute of the first file and file attributes of multi-level subfiles included in the first file.

In another possible implementation, the setting request includes a file identifier of the first file among the plurality of files.

In this way, the recursively setting parameter is added to the setting request, to indicate the storage server to set the file attribute of the first file and the file attributes of the multi-levels of subfiles included in the first file. Therefore, batch file attribute setting is enabled, and a quantity of setting commands of which transmission is performed between the client and the storage server is reduced. This reduces consumption of network resources and improves file attribute setting efficiency.

In another possible implementation, the setting request further includes either a synchronous identifier or an asynchronous identifier. The synchronous identifier indicates the storage server to feed back the setting response in a synchronous manner. The asynchronous identifier indicates the storage server to feed back the setting response in an asynchronous manner.

Therefore, the storage server feeds back the setting response in the synchronous manner or the asynchronous manner, so that the client learns of a setting result.

In another possible implementation, the setting result indicates success or failure,
so that the client learns of the setting result. When setting fails, the setting request is sent again.

In another possible implementation, the setting result indicates a requery.

When the storage server has not completed setting of the file attributes of the plurality of files, the client determines, based on the setting response, that setting of the file attributes of the plurality of files has not been completed, and the client waits for the storage server to set the file attributes. Therefore, the client releases a slot of a session to process another task, thereby improving resource utilization.

In another possible implementation, the setting request includes a synchronous identifier. The setting response includes a task identifier and a first error code, where the first error code indicates the requery. After the setting response is received, the method further includes: sending a setting status query request, where the setting status query request includes the task identifier; and receiving a setting status query response, where the setting status query response indicates the setting result for the file attributes of the plurality of files based on the setting request. Therefore, when the client waits for the storage server to set the file attributes of the plurality of files, the client sends the setting status query request to the storage server, to obtain progress of setting the file attributes of the plurality of files by the storage server. If the storage server succeeds in setting the file attributes of the plurality of files, the setting status query response indicates success. If the storage server fails to set the file attributes of plurality of files, the setting status query response indicates failure. The setting status query request includes the task identifier, so that the storage server determines progress of a file attribute setting task indicated by the task identifier.

In another possible implementation, the setting result indicates to wait for the setting result for the file attributes of the plurality of files by the storage server.

In another possible implementation, the setting request includes an asynchronous identifier. The setting response includes a task identifier and a first error code, where the first error code indicates waiting. After the setting response is received, the method further includes: receiving a callback message, where the callback message includes the task identifier and the setting result, and the setting result includes either success or failure; and sending a callback response, where the callback response indicates a callback success or a callback failure.

Therefore, when the client communicates with the storage server in an asynchronous manner, the client releases a slot of a session to process another task, thereby improving resource utilization. The client asynchronously monitors a task, and then the client receives the callback message, so that the client learns of a setting result. When setting fails, the setting request is sent again.

In another possible implementation, the callback message further includes a verification code.

Sending the callback response includes: when the task identifier succeeds being verified based on the verification code, sending the callback response. After the callback message is received, the method further includes: when the task identifier fails to be verified based on the verification code, sending a second error code.

The task identifier is verified to ensure accuracy of the callback response, to avoid task disorder caused by incorrect information.

In another possible implementation, the method further includes: sending a setting cancellation request, where the setting cancellation request indicates to cancel a task corresponding to the setting request; and receiving a setting cancellation response, where the setting cancellation response indicates cancellation success or cancellation failure.

If the client waits for a long time for the storage server to respond to the setting result, the client may actively send the setting cancellation request, to indicate the storage server to cancel the setting of the file attributes of the plurality of files, to avoid a waste of resources caused by occupying a slot of a session by the client and the storage server for a long time. After canceling the setting of the file attributes, the client may further re-initiate the setting request for the file attributes, to indicate the storage server to re-perform the setting of the file attributes. According to a second aspect, a file attribute setting method is provided, where the method is performed by a storage server. The method includes: The storage server receives a setting request from a client, and sets file attributes of a plurality of files based on the setting request; and sends a setting response to the client, where the setting response indicates a setting result for the file attributes of the plurality of files based on the setting request.

In comparison with a case that a file attribute of only one file can be set through a single setting command, when the file attributes of the plurality of files are to be set, a plurality of setting commands need to be received, consuming a large quantity of network resources and reducing file attribute setting efficiency. According to the solution provided in this application, the storage server does not need to receive a plurality of file attribute setting commands, and the file attributes of the plurality of files can be set through a single setting command, thereby enabling batch file attribute setting, reducing a quantity of setting commands transmitted between the client and the storage server, reducing consumption of network resources, and improving file attribute setting efficiency.

In a possible implementation, setting the file attributes of the plurality of files based on the setting request specifically includes: querying all subfiles in the files; and setting all found subfiles based on the file attributes.

In another possible implementation, the setting request includes a recursively setting parameter and a file identifier of a first file among the plurality of files, and the recursively setting parameter indicates to set a file attribute of the first file and file attributes of multi-level subfiles included in the first file.

In this way, the storage server sets the file attribute of the first file and the file attributes of the multi-level subfiles included in the first file based on the recursively setting parameter added in the setting request. Therefore, batch file attribute setting is enabled, and a quantity of setting commands of which transmission is performed between the client and the storage server is reduced. This reduces consumption of network resources and improves file attribute setting efficiency.

In another possible implementation, the setting request includes a synchronous identifier. Sending the setting response includes: when a timer does not expire, sending the setting response, where the setting response indicates success or failure in setting the file attributes of the plurality of files based on the setting request. The synchronous identifier indicates the storage system to feed back the setting response in a synchronous manner.

In another possible implementation, the setting request includes the synchronous identifier. Sending the setting response includes: when a timer expires, sending the setting response, where the setting response indicates to requery the setting result for the file attributes of the plurality of files based on the setting request.

Therefore, the timer is set, so that the storage server feeds back the setting response in a timely manner. The storage server completes setting of the file attributes of the plurality of files. If the timer does not expire, success or failure is fed back in a timely manner. The storage server does not complete setting of the file attributes of the plurality of files. If the timer expires, setting waiting is fed back in a timely manner. Therefore, the client obtains a file attribute setting status in a timely manner, to avoid occupying a slot of a session by the client and the storage server for a long time. Therefore, the client releases the slot of the session to process another task, thereby improving resource utilization.

In another possible implementation, the setting response includes a task identifier and a first error code, where the first error code indicates a requery. After the setting response is sent, the method further includes: receiving a setting status query request, where the setting status query request includes the task identifier; and sending a setting status query response, where the setting status query response indicates the setting result for the file attributes of the plurality of files based on the setting request.

Therefore, after waiting for the storage server to set the file attributes of the plurality of files, the client sends the setting status query request to the storage server, and the storage server feeds back, based on the setting status query request sent by the client, progress of setting the file attributes of the plurality of files by the storage server. If the storage server succeeds in setting the file attributes of the plurality of files, the setting status query response indicates success. If the storage server fails to set the file attributes of plurality of files, the setting status query response indicates failure. The setting status query request includes the task identifier, so that the storage server determines progress of a task indicated by the task identifier.

In another possible implementation, the setting status query request further includes a verification code. Sending the setting status query response includes: when the task identifier succeeds being verified based on the verification code, sending the setting status query response. The method further includes: when the task identifier fails to be verified based on the verification code, sending a second error code.

The task identifier is used to ensure accuracy of the setting status query response, to avoid task disorder caused by incorrect information.

In another possible implementation, the setting request includes an asynchronous identifier. The setting response indicates to wait for the setting result for the file attributes of the plurality of files based on the setting request. After the setting response is sent, the method further includes: sending a callback message, where the callback message includes the task identifier and the setting result for the file attributes of the plurality of files, and the setting result includes either success or failure; and receiving a callback response, where the callback response indicates a callback success or a callback failure. The asynchronous identifier indicates the storage system to feed back the setting response in an asynchronous manner.

Therefore, when the client communicates with the storage server in an asynchronous manner, the client releases a slot of a session to process another task, and asynchronously monitors the task. Then, the storage server sends the callback message, so that the client learns of a setting result. When setting fails, the setting request is sent again.

In another possible implementation, the method further includes: receiving a setting cancellation request, where the setting cancellation request indicates to cancel a task corresponding to the setting request; canceling, based on the setting cancellation request, the task corresponding to the setting request; and sending a setting cancellation response, where the setting cancellation response indicates cancellation success or cancellation failure.

If the client waits for a long time for the storage server to respond to the setting result, the client may actively send the setting cancellation request, and the storage server cancels the setting of the file attributes of the plurality of files, to avoid a waste of resources caused by occupying a slot of a session by the client and the storage server for a long time. After canceling the setting of the file attributes, the client may further re-initiate the setting request for the file attributes, to indicate the storage server to re-perform the setting of the file attributes.

According to a third aspect, a client is provided. The client includes modules configured to perform the file attribute setting method in any one of the first aspect or the possible designs of the first aspect. For example, a communication module is configured to send a setting request to a storage server, to indicate the storage server to set file attributes of a plurality of files. The communication module is further configured to receive a setting response, where the setting response indicates a setting result for the file attributes of the plurality of files based on the setting request.

In a possible implementation, the setting request includes a recursively setting parameter and an identifier of a first file among the plurality of files, and the recursively setting parameter indicates to set a file attribute of the first file and file attributes of multi-level subfiles included in the first file.

In another possible implementation, the setting request further includes either a synchronous identifier or an asynchronous identifier.

In another possible implementation, the setting result indicates success or failure.

In another possible implementation, the setting result indicates a requery.

In another possible implementation, the setting request includes a synchronous identifier. The setting response includes a task identifier and a first error code, where the first error code indicates the requery. The communication module is further configured to: send a setting status query request, where the setting status query request includes the task identifier; and receive a setting status query response, where the setting status query response indicates the setting result for the file attributes of the plurality of files based on the setting request.

In another possible implementation, the setting result indicates to wait for a setting result from a storage system.

In another possible implementation, the setting request includes an asynchronous identifier. The setting response includes a task identifier and a first error code, where the first error code indicates waiting. The communication module is further configured to: receive a callback message, where the callback message includes the task identifier and the setting result, and the setting result includes either success or failure; and send a callback response, where the callback response indicates a callback success or a callback failure.

In another possible implementation, the callback message further includes a verification code.

When sending the callback response, the communication module is specifically configured to: when the task identifier succeeds being verified based on the verification code, send the callback response. The communication module is further configured to: when the task identifier fails to be verified based on the verification code, send a second error code.

In another possible implementation, the communication module is further configured to: send a setting cancellation request, where the setting cancellation request indicates to cancel a task corresponding to the setting request; and receive a setting cancellation response, where the setting cancellation response indicates cancellation success or cancellation failure.

According to a fourth aspect, a storage server is provided. The storage server includes modules configured to perform the file attribute setting method in any one of the second aspect or the possible designs of the second aspect. For example, a communication module is configured to receive a setting request from the client. A processing module is configured to set file attributes of a plurality of files based on the setting request. The communication module is further configured to send a setting response to the client, where the setting response indicates a setting result for the file attributes of the plurality of files based on the setting request.

In a possible implementation, when setting the file attributes of the plurality of files based on the setting request, the processing module is specifically configured to: query all subfiles in the files; and set all found subfiles based on the file attributes.

In another possible implementation, the setting request includes a recursively setting parameter and an identifier of a first file among the plurality of files. When setting the file attributes of the plurality of files, the processing module is specifically configured to set the file attributes of the first file and file attributes of multi-level subfiles included in the first file.

In another possible implementation, the setting request includes a synchronous identifier. When sending the setting response, the communication module is specifically configured to: when a timer does not expire, send the setting response, where the setting response indicates success or failure in setting the file attributes of the plurality of files based on the setting request.

In another possible implementation, the setting request includes a synchronous identifier. When sending the setting response, the communication module is specifically configured to: when a timer expires, send the setting response, where the setting response indicates to requery the setting result for the file attributes of the plurality of files based on the setting request.

In another possible implementation, the setting response includes a task identifier and a first error code, where the first error code indicates the requery. The communication module is further configured to: receive a setting status query request, where the setting status query request includes the task identifier; and send a setting status query response, where the setting status query response indicates the setting result for the file attributes of the plurality of files based on the setting request. In another possible implementation, the setting status query request further includes a verification code. When sending the setting status query response, the communication module is specifically configured to: when the task identifier succeeds being verified based on the verification code, send the setting status query response. The communication module is further configured to: when the task identifier fails to be verified based on the verification code, send a second error code.

In another possible implementation, the setting request includes an asynchronous identifier. The setting response indicates to wait for the setting result for the file attributes of the plurality of files based on the setting request. The communication module is further configured to: send a callback message, where the callback message includes the task identifier and the setting result for the file attributes of the plurality of files, and the setting result includes either success or failure; and receive a callback response, where the callback response indicates a callback success or a callback failure.

In another possible implementation, the communication module is further configured to receive a setting cancellation request, where the setting cancellation request indicates to cancel a task corresponding to the setting request. The processing module is further configured to cancel, based on the setting cancellation request, the task corresponding to the setting request. The communication module is further configured to send a setting cancellation response, where the setting cancellation response indicates cancellation success or cancellation failure.

According to a fifth aspect, a computer device is provided, where the computer device includes at least one processor and a memory. The memory is configured to store a group of computer instructions. When serving as the client in any one of the first aspect or the possible implementations of the first aspect to execute the group of computer instructions, the processor performs operation steps of the file attribute setting method in any one of the first aspect or the possible implementations of the first aspect. When serving as the storage server in any one of the second aspect or the possible implementations of the second aspect to execute the group of computer instructions, the processor performs operation steps of the file attribute setting method in any one of the second aspect or the possible implementations of the second aspect. According to a sixth aspect, a communication system is provided, where the communication system includes a client and a plurality of storage servers. The plurality of storage servers are mounted to the client. The client is configured to perform operation steps of the file attribute setting method in any one of the first aspect or the possible implementations of the first aspect. The storage server is configured to perform operation steps of the file attribute setting method in any one of the second aspect or the possible implementations of the second aspect.

According to a seventh aspect, a computer-readable storage medium is provided, and includes computer software instructions. When the computer software instructions are run in a computer device, the computer device is caused to perform operation steps of the method in any one of the first aspect or the possible implementations of the first aspect or operation steps of the method in any one of the second aspect or the possible implementations of the second aspect.

According to an eighth aspect, a computer program product is provided. When the computer program product runs on a computer, the computer is caused to perform operation steps of the method in any one of the first aspect or the possible implementations of the first aspect or operation steps of the method in any one of the second aspect or the possible implementations of the second aspect.

For technical effects brought by any one of the design manners of the third aspect to the eighth aspect, refer to the technical effects brought by the first aspect and the second aspect or different design manners. Details are not described herein again.

In this application, on the basis of the implementations according to the foregoing aspects, the implementations may be further combined to provide more implementations.

### BRIEF DESCRIPTION OF DRAWINGS

FIG. 1 is a diagram of a file attribute setting process according to this application;
FIG. 2 is a diagram of an architecture of a communication system according to this application;
FIG. 3 is a schematic flowchart of a file attribute setting method according to this application;
FIG. 4a and FIG. 4b are operation diagrams of a file attribute setting command according to this application;
FIG. 5a and FIG. 5b are diagrams of feeding back a setting response in a synchronous manner according to this application;
FIG. 6 is a diagram of feeding back a setting response in an asynchronous manner according to this application;
FIG. 7 is a diagram of canceling file attribute setting according to this application;
FIG. 8 is a diagram of a structure of a client according to this application;
FIG. 9 is a diagram of a structure of a storage server according to this application; and
FIG. 10 is a diagram of a structure of a computer device according to this application.

### DESCRIPTION OF EMBODIMENTS

For ease of understanding, main terms in this application are first explained.

Network attached storage (NAS): a data-centric technology for connecting a storage device to a network to provide dedicated data and file services. The network attached storage separates a storage server from an application server, and allows a client to access the storage server through the network and access data, without intervention of the application server. In this way, bandwidth is released, storage performance is improved, a total cost of ownership is reduced, and investments are protected. The network attached storage may also be an apparatus for dedicated data storage, and is also referred to as a network storage server or a storage server.

The NAS described in this application may be designed based on a client/server (Client/Server, C/S) architecture. A NAS client software is installed on the client, a NAS server software is installed on a server, and a file directory on the server is mounted to the client, so that the client can access a file system of the server in different languages, operating systems, and file folders. Optionally, the client may be referred to as a local computer, a local device, a local end computer, or a local end device. The server may be referred to as a remote computer, a remote device, a storage server, or a network storage server. The client may also be referred to as a NAS client. The server may also be referred to as a NAS server.

The network attached storage includes a storage device (for example, a disk array, a CD/DVD drive, a tape drive, or a removable storage medium), an operating system, a file system, and the like.

The client and the network attached storage support a plurality of protocols (for example, a network file system (Network File System, NFS), a common internet file system (Common Internet File System, CIFS), a file transfer protocol (File Transfer Protocol, FTP), and a hypertext transfer protocol (Hypertext Transfer Protocol, HTTP)) and various operating systems.

The client accesses the network attached storage to perform file operations on a file. For example, the file operations include: creating a file, writing a file, reading a file, repositioning a file, deleting a file, truncating a file, querying a file attribute, setting a file attribute, and the like.

**File (file):** a collection of information stored on a computer device that serves as a carrier. The file may be a text document, a picture, a video, an audio file, a program, or the like. The file usually has a file name extension, indicating a file type. For example, if a picture is saved in a JPEG format, a file name extension of the picture is .jpg.

**File folder (file folder):** a data structure for organizing and managing a disk file.

The file folder may refer to a directory with an independent path established for storing electronic files by category in computer disk space. The file folder provides a path address that points to corresponding disk space, and may have a file name extension but not have a function of the file name extension. The file folder facilitates file sharing and protection.

To store files by category in an orderly manner, the files are organized in several directories. The directories are also referred to as file folders. The file folder generally uses a multi-layer structure (for example, a tree structure). In this structure, each disk has a root file folder, and the root file folder includes several files and file folders. The file folder may not only include a file, but also include a lower-level file folder, and a multi-level file folder structure formed in this way stores files of different types and functions by category, facilitates file query, and allows files in different file folders to have a same file name.

**File attribute (File Attribute):** information that describes a file, where the file attribute is not content of the file. The file attribute is for querying and arranging a file. The file attribute can be for classifying files into different types and defining file properties, to facilitate file storage and transmission.

Common file attributes include a system attribute, a hidden attribute, a permission attribute, and an archive attribute.

For example, the file attributes include a name, an identifier, a type, a location, a size, protection, time, a date, a user identifier, and the like. The name is a file name, uniquely identifying a file. The identifier, uniquely identifying a file, is usually a number and is a machine-readable file name. The location is a storage location of a file. The size is a file size (in bytes, words, or blocks), as well as a maximum size that may be allowed. The protection means permission attributes such as file reading, writing, and execution, access control list (Access Control List, ACL), and mode attributes. The time, the date, and the user identifier are information related to file creation, last modification, and last use.

Usually, when setting a file attribute, a client obtains a file list and traverses files, queries a file attribute of each file, and sends a new file attribute to a storage server, to set the file attribute.

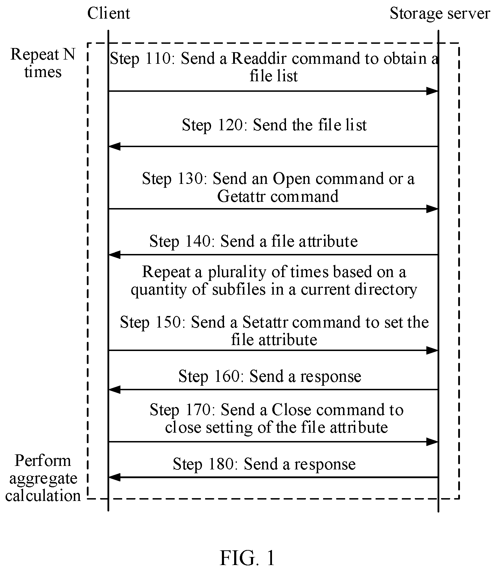

For example, FIG. 1 is a diagram of a file attribute setting process according to this application. As shown in FIG. 1, a client sends a Readdir command to a storage server to obtain a file list (step 110); and the storage server sends the file list to the client (step 120). The client sends an Open command or a Getattr command to the storage server to query a file attribute (step 130); and the storage server sends the file attribute to the client (step 140). The client sends a Setattr command to the storage server to set the file attribute (step 150); and the storage server sets the file attribute and sends a response to the client (step 160). The client sends a Close command to the storage server to close the setting of the file attribute (step 170); and the storage server closes setting of the file attribute and sends a response to the client (step 180).

However, the file attribute setting process needs to be performed for each file. After obtaining the file attribute of each file, the client may need to perform aggregate calculation to aggregate file attributes of a plurality of files.

To resolve problems that when the client sets the file attributes of the plurality of files, a large quantity of network resources between the client and the storage server are consumed for transmission of a file attribute setting command, and file attribute setting efficiency is low, this application provides a file attribute setting method, where the client sends a setting request to the storage server, to indicate the storage server to set file attributes of a plurality of files. That is, the storage server can set the file attributes of the plurality of files through only one file attribute setting command.

In this way, in comparison with a case that a file attribute of only one file can be set through a single setting command, when the file attributes of the plurality of files are to be set, a plurality of setting commands need to be sent, consuming a large quantity of network resources and reducing file attribute setting efficiency. According to the solution provided in this application, the client does not need to send a plurality of file attribute setting commands, and the file attributes of the plurality of files can be set through a single setting command, thereby enabling batch file attribute setting, reducing a quantity of setting commands transmitted between the client and the storage server, reducing consumption of network resources, and improving file attribute setting efficiency. In addition, the client does not need to send a Readdir command to obtain a file list, store the file list, or traverse the file list to send a setting command for each file, thus reducing consumption of storage resources and computing resources of the client.

In different operating systems, the word file (file) has different meanings. In some operating systems, for example, Windows^{®}, the file (file) is data for recording content, and is, for example, a text document, a picture, a video, an audio file, or a program. The file usually has a file name extension, indicating a file type. For example, if a picture is saved in a JPEG format, a file name extension of the picture is .jpg. A directory (directory), also referred to as a file folder (folder), is used to describe an index location of a file in a file system.

However, in some other operating systems, for example, Linux^{®}, the directory (directory) is also used to describe a path of a file, but the file (file) may be data (for example, a text document, a picture, a video, an audio file, or a program) for recording content, or may be the directory. For ease of description, unless otherwise specified, this meaning is used in the file in embodiments of this application.

For example, for path/root/media/spring.jpg, /root, /root/media, and spring.jpg are all referred to as files. In embodiments of this application, a hierarchical relationship between files is further distinguished by using descriptions such as a file and a subfile. /root/media and spring.jpg are both subfiles in /root, and spring.jpeg is a subfile in /root/media.

A type and a function of the server are not limited in this application. For example, the type of the server includes a blade server, a tower server, a cabinet server, and a rack server. For another example, the server includes a storage server having a storage function or a compute server having a computing function, and the compute server also has a storage function.

The following describes in detail an implementation of file attribute setting provided in this application with reference to accompanying drawings.

Solutions provided in this application may be applied to a communication system such as a cluster network or a supernode interconnection network, for example, a high-performance computing (High-performance computing, HPC) network or a high availability (High Availability, HA) network.

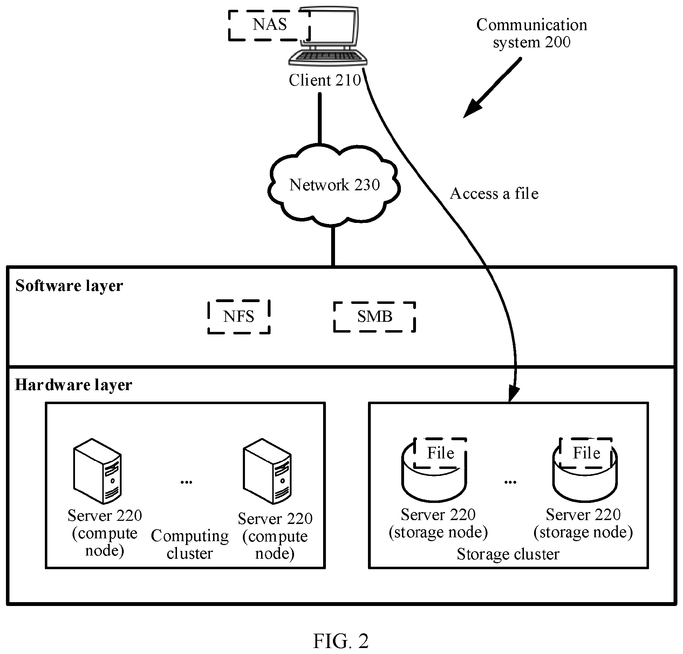

For example, FIG. 2 is a diagram of an architecture of a communication system according to this application. As shown in FIG. 2, the communication system 200 includes a client 210 and a plurality of servers 220.

The server 220 may be a compute node that provides a computing function. The compute node may be a compute server. A plurality of servers that provide a computing function can form a computing cluster. For example, the server 220 may include compute units having a computational capability, such as a central processing unit (central processing unit, CPU), a graphics processing unit (graphics processing unit, GPU), a data processing unit (data processing unit, DPU), a neural processing unit (neural processing unit, NPU), and an embedded neural-network processing unit (neural-network processing unit, NPU), to provide high-performance computing.

The server 220 may also be a storage node that provides a storage function, and the storage node may also be referred to as a storage server. A plurality of servers that provide a storage function can form a storage cluster. For example, the server 220 may include one or more controllers, a network interface card, and a plurality of hard disks. The hard disk is configured to store data. The hard disk may be a magnetic disk or another type of storage medium, for example, a solid-state drive or a shingled magnetic recording hard drive. The network interface card is configured to communicate with the compute node or the client 210. The controller is configured to write data into the hard disk or read data from the hard disk based on a data read/write request sent by the compute node. During data reading/writing, the controller needs to convert, into an address that can be identified by the hard disk, an address carried in the data read/write request.

FIG. 2 is merely the diagram. A quantity of devices included in the communication system is not limited in this embodiment of this application. For example, the communication system may include a plurality of clients. One client can be connected to a plurality of servers and mount directories of different servers. Different clients establish connections with different servers and mount directories of different servers. A same server provided by the same server can be mounted to different clients. Optionally, the communication system may further include another device, for example, a network device (for example, a switch or a router). The plurality of servers are connected through the network device, and data transmission is performed through the network device.

The client 210 communicates with the plurality of servers 220 through a network 230. The network 230 may be an internal network of an enterprise (for example, a local area network (Local Area Network, LAN)) or the internet (Internet).

A protocol for communication between the client and the server is not limited in this application. In some embodiments, the client communicates with the server according to a service message block (Server Message Block, SMB) protocol. The client may be an SMB client having a Windows operating system, and the server may be an SMB server having the Windows operating system. In some other embodiments, the client communicates with the server according to the NFS protocol. The client may be an NFS client having a Linux/Unix operating system, and the server may be an NFS server having the Linux/Unix operating system.

In this application, the client 210 is configured to send a file attribute setting command to the server, and the server sets file attributes of a plurality of files through the file attribute setting command, thereby enabling batch file attribute setting. The server 220 is configured to provide a function and an interface for batch device file attribute setting.

The following describes file attribute setting in detail with reference to accompanying drawings.

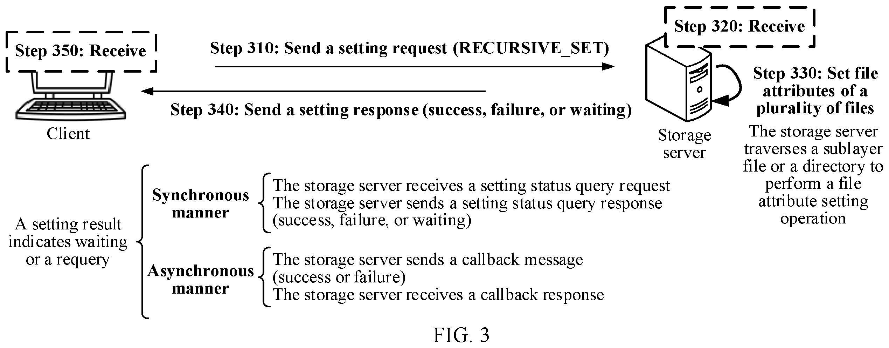

FIG. 3 is a schematic flowchart of a file attribute setting method according to this application. A client may be the client shown in FIG. 1. A server may be a storage server in the storage cluster in FIG. 1. As shown in FIG. 3, the method includes the following steps.

**Step 310: The client sends a setting request.**

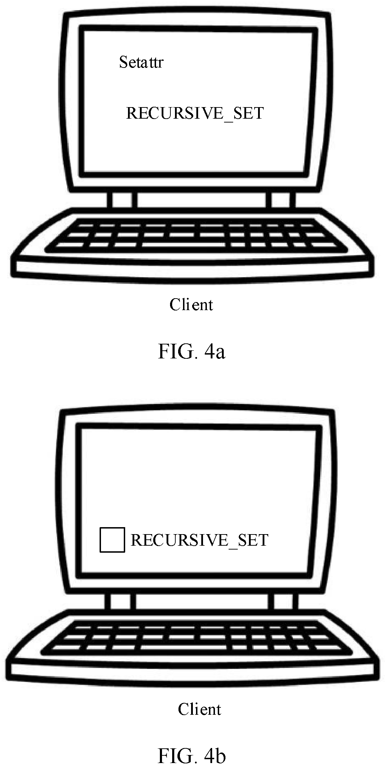

In response to a file attribute setting operation, the client sends the setting request to the storage server. In some embodiments, a user may operate an interface of the client, and the client responds to a file attribute setting command input by the user. For example, as shown in FIG. 4a, the user inputs the file attribute setting command on the interface of the client. As shown in FIG. 4b, the user selects the file attribute setting command on the interface of the client.

In response to the file attribute setting command input by the user, the client identifies that file attributes of a plurality of files are to be set. In this case, the setting request indicates to set the file attributes of the plurality of files.

File types and organizational structures of the plurality of files are not limited in this application. For example, the plurality of files may include at least one of a picture, a video, an audio file, a Word document, a portable document format (Portable Document Format, PDF), and a file folder. In some embodiments, the plurality of files include a plurality of same-level files, that is, there is no nesting relationship between the plurality of files. The setting request indicates to set file attributes of the plurality of same-level files.

In some other embodiments, the plurality of files include a plurality of nested files, that is, there is a nesting relationship between the plurality of files. The setting request indicates to set file attributes of multi-level files.

The plurality of files include parent files and multi-level subfiles. The file may include at least one of a file and a file folder. The file folder may be a type of file. The file folder may not only include a file, but also include a lower-level file folder. The plurality of files may form files of a multi-layer structure. For example, the plurality of files include a first file and a first file folder. If the first file folder further includes a second file folder, there is a nesting relationship between the first file folder and the second file folder, where the first file folder is a parent file of the second file folder, and the second file folder is a subfile of the first file folder. If the second file folder includes a second file, there is a nesting relationship between the second file folder and the second file, where the second file folder is a parent file of the second file, and the second file is a subfile of the second file folder.

The setting request may include a recursively setting parameter. The recursively setting parameter indicates to set the file attributes of the plurality of files. It is alternatively described as follows: the recursively setting parameter indicates to set file attributes of the file and the multi-level subfiles. Alternatively, the recursively setting parameter indicates to set file attributes of a directory and subitems.

In some embodiments, the setting request further includes file identifiers and the file attributes of the plurality of files, that is, the file identifiers and the file attributes of the plurality of files are listed in the setting request. The file identifier uniquely indicates a file. The file identifier includes but is not limited to: creation time, modification time, ownership information, and permission information of the file. The file attribute may include an attribute value of the file attribute, so that the storage server modifies the attribute value of the file indicated by the file identifier to that of the file attribute included in the setting request.

In some other embodiments, the setting request further includes a file identifier and a file attribute of the first file among the plurality of files. The client sends the file identifier and the file attribute of the first file among the plurality of files to the storage server. The storage server sets, based on the recursively setting parameter and the file attribute of the first file, the file attribute of the first file and file attributes of multi-level subfiles included in the first file. That is, after the setting of the file attribute of the first file and the file attributes of the multi-level subfiles in the first file is completed, the file attribute of the first file is the same as the file attributes of the multi-level subfiles in the first file, where both the file attribute of the first file and the file attributes of the multi-level subfiles in the first file are the attribute value of the file attribute of the first file included in the setting request.

**Step 320: The storage server receives the setting request sent by the client.**

The client can directly access the storage server through a network using a protocol such as NFS, CIFS, FTP, or HTTP, that is, the client can send the setting request to the storage server through the network. The storage server receives, through the network, the setting request sent by the client. **Step 330: The storage server sets the file attributes of the plurality of files.**

The setting request includes the recursively setting parameter, and the storage server determines to set the file attributes of the plurality of files.

In some embodiments, the setting request includes the file identifiers and the file attributes of the plurality of files, and the recursively setting parameter. The storage server sets, one by one, the file attributes of the plurality of files stored in the storage server, that is, sets the file attributes of the files stored in the storage server to those indicated by the setting request. For example, the setting request includes a first attribute value of the file attribute of the file, and the storage server obtains the file attribute of the file indicated by the file identifier stored in the storage server, and a second attribute value of the file attribute, and modifies the second attribute value of the file attribute to the first attribute value.

In some other embodiments, the setting request includes the file identifier and the file attribute of the first file among the plurality of files, and the recursively setting parameter. The storage server sets, one by one, the file attribute of the first file stored in the storage server and the file attributes of the multi-level subfiles in the first file. The file attribute of the first file and the file attributes of the multi-level subfiles in the first file are set to the file attribute of the first file indicated by the setting request. The file attribute of the first file is the same as the file attributes of the multi-level subfiles in the first file.

For example, the setting request includes a first attribute value of the file attribute of the first file. The storage server sets both the file attribute of the first file and the file attributes of the multi-level subfiles in the first file to the first attribute value.

**Step 340: The storage server sends a setting response.**

If a back channel (back channel) is not created when a link is established between the client and the storage server, the storage server may send the setting response to the client in a synchronous manner. If the storage server feeds back the setting response in an asynchronous manner, the storage server sends an error code to the client. For example, the error code may be NFS4ERR_CB_PATH_DOWN.

If a back channel is created when a link is established between the client and the storage server, the storage server may send the setting response to the client in a synchronous manner or an asynchronous manner.

Optionally, the setting request includes either a synchronous identifier or an asynchronous identifier. The storage server determines, based on the synchronous identifier or the asynchronous identifier, a manner of feeding back the setting response.

When the setting request includes the synchronous identifier, the storage server determines, based on the synchronous identifier, to send the setting response to the client in the synchronous manner. The setting response indicates a setting result for the file attributes of the plurality of files based on the setting request. The setting result indicates success, failure, or a requery. For example, the setting response includes success parameter, failure parameter, or a requery parameter.

When the setting request includes the asynchronous identifier, the storage server determines, based on the asynchronous identifier, to send the setting response to the client in the synchronous manner or the asynchronous manner. The setting result indicates success, failure, or waiting. For example, the setting response includes success parameter, failure parameter, or waiting parameter.

If the storage server succeeds in setting the file attributes of the plurality of files based on the setting request, the storage server may send the success parameter to the client.

In a process in which the storage server performs file attribute setting, if there are a large quantity of files, the storage server may send the requery parameter to the client, to notify the client to query the setting status for the file attributes, so that the client sends a setting status query request to the storage server to learn of the setting result for the file attributes.

In the process in which the storage server performs file attribute setting, if there are a large quantity of files, the storage server may send the waiting parameter to the client, to notify the client to wait for the storage server to feed back the setting result for the file attributes, so that the client asynchronously monitors and learns of the setting result for the file attributes.

Therefore, session slot occupancy of the client and the storage server is reduced, and network resource utilization is improved.

In some embodiments, the storage server may encounter an error during the setting of the file attributes of the plurality of files, resulting in failure in setting the file attributes. In this case, the storage server may feed back the failure parameter to the client.

For example, the storage server may encounter a file error during the setting of the file attributes of the plurality of files, so that the storage server can feed back an error code to the client. The error code may be an error code of a Setattr command defined in NFSv4.2, indicating that a recursively set attribute encounters an error. The file error includes: The storage server has no permission to set the file attributes of the plurality of files; the storage server does not store the plurality of files; and the like.

For another example, the storage server may encounter a system fault during the setting of the file attributes of the plurality of files, so that the storage server can feed back an error code to the client. For example, the error code may be NFS4ERR_BAD_STATEID. The system fault includes a storage server fault, a software fault, an error in a command included in the setting request, and the like.

A solution in which the storage server sends the setting response to the client in the synchronous manner or the asynchronous manner is described in the following embodiments.

**Step 350: The client receives the setting response sent by the storage server.**

The client receives the setting response, and determines a setting result based on the setting response. If the storage server succeeds in setting the file attributes of the plurality of files, and the setting result indicates the success, the client determines that the file attributes of the plurality of files are successfully set. If the storage server fails to set the file attributes of the plurality of files, and the setting result indicates the failure, the client determines that the file attributes of the plurality of files fail to be set.

Therefore, this application defines a standard protocol command, that is, a standard command for batch file attribute setting. The client does not need to send a large quantity of Readdir commands, file attribute query commands, and file attribute setting commands, and the file attributes of the plurality of files can be set through a single setting command, thereby enabling batch file attribute setting, reducing a quantity of setting commands transmitted between the client and the storage server, reducing consumption of network resources, and improving file attribute setting efficiency. In addition, the client does not need to send a Readdir command to obtain a file list, store the file list, or traverse the file list to send a setting command for each file, thus reducing consumption of storage resources and computing resources of the client.

The following separately describes in detail feeding back the setting response in the synchronous manner and the asynchronous manner by the storage server.

The storage server may send the setting response in the synchronous manner in the following two manners.

In a first possible implementation, the storage server feeds back the setting response based on the setting result for the file attributes.

The storage server needs to wait for the setting result for the file attributes of the plurality of files, and does not send the setting response to the client before the storage server obtains the setting result. After completing setting of the file attributes of the plurality of files, the storage server obtains the setting result, and sends the setting response to the client. The setting response indicates the setting result for the file attributes of the plurality of files based on the setting request. The setting result may indicate success or failure. For example, the client performs step 310, to be specific, after the client sends the setting request to the storage server, the storage server sets the file attributes of the plurality of files based on the setting request, and the client does not perform step 350 until the storage server obtains the setting result and sends the setting response to the client, that is, the client receives the setting response sent by the storage server.

However, a slot (slot) of a session (session) needs to be always occupied by the storage server and the client, causing a decrease in a quantity of available slots. If a plurality of file attribute setting tasks are maintained between the client and the storage server, a plurality of slots are occupied, and no slot is available for the client in severe cases.

In a second possible implementation, the storage server may feed back the setting response based on a timer. Duration of the timer may be set as required. This is not limited in this application. Shorter duration of the timer indicates that the storage server feeds back the setting response in a more timely manner. On the contrary, longer duration of the timer indicates that the storage server feeds back the setting response more slowly.

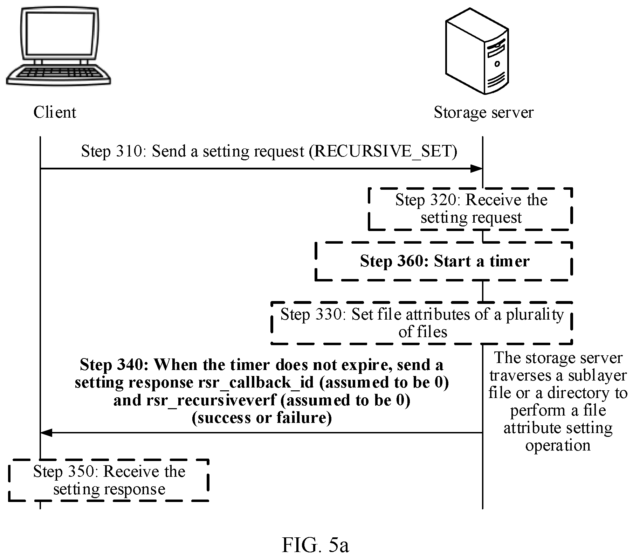

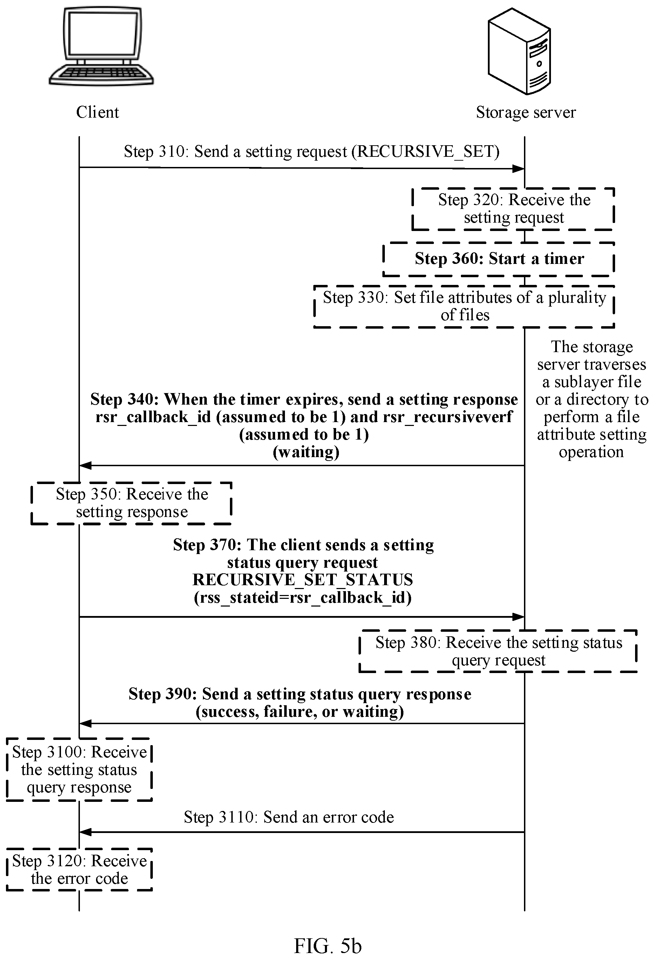

FIG. 5a and FIG. 5b are diagrams of feeding back a setting response in a synchronous manner according to this application. A difference from the file attribute setting shown in FIG. 3 lies in that the storage server feeds back the setting response based on duration of the timer without waiting for the setting result for the file attributes of the plurality of files. The setting response indicates any one of success, failure, or a requery.

In some embodiments, when the timer does not expire, and the storage server obtains the setting result after the setting of the file attributes of the plurality of files is completed, the storage server sends the setting response to the client, where the setting result may indicate success or failure. For example, as shown in FIG. 5a, based on the method procedure shown in FIG. 3, step 360 is further included. For example, after receiving the setting request, the storage server starts the timer, that is, performs step 360. Further, the storage server sets the file attributes of the plurality of files. When the timer does not expire, and the storage server obtains the setting result, the storage server sends the setting response to the client. That the storage server sends the setting response to the client includes: When the timer does not expire, the storage server sends the setting response to the client.

In some other embodiments, when the timer expires, and the storage server has not completed the setting of the file attributes of the plurality of files, that is, the storage server does not obtain the setting result, the storage server sends the setting response to the client, where the setting result may indicate a requery.

For example, as shown in FIG. 5b, based on the method procedure shown in FIG. 3, step 360 and step 370 to step 3120 are further included.

For example, after receiving the setting request, the storage server starts the timer, that is, performs step 360. Further, the storage server performs step 330 to step 350, to be specific, the storage server sets the file attributes of the plurality of files. When the timer expires, and the storage server does not obtain the setting result, the storage server sends the setting response to the client, where the setting result may indicate a requery.

That the storage server sends the setting response to the client includes: When the timer expires, the storage server sends the setting response to the client. The setting response includes a task identifier and an error code. The task identifier indicates a file attribute setting task executed by the storage server based on the setting request. Optionally, the setting response may further include a verification code, and the verification code may be determined based on receiving time of the setting request. For example, the task identifier may be rsr_callback_id, the error code may be NFS4_PENDING, and the verification code may be rsr_recursiveverf. When rsr_callback_id=0, rsr_recursiveverf=0, and the error code is NFS4_OK, it indicates that the storage server succeeds in setting the file attributes of the plurality of files. When rsr_callback_id=0, rsr_recursiveverf=0, and the error code is an error code of Setattr or NFS4ERR_BAD_STATEID, it indicates that the storage server fails to set the file attributes of the plurality of files. When rsr_callback_id=1, rsr_recursiveverf=1, and the error code is NFS4_OK or PENDING, it indicates that the storage server indicates the client to requery the setting result for the file attributes of the plurality of files. For explanations of step 310 to step 350, refer to the foregoing descriptions.

After receiving the setting response, the client determines, based on the requery indicated by the setting response, that the storage server has not completed the setting of the file attributes of the plurality of files. The client waits for the storage server to set the file attributes of the plurality of files, and requeries the setting status for the file attributes. That is, the client waits to perform step 370.

**Step 370: The client sends a setting status query request.**

The setting status query request includes a task identifier. A value of the task identifier included in the setting status query request may be the same as a value of the task identifier included in the setting response.

Optionally, after receiving the setting response, the client may also start a timer. When the timer of the client expires, the client sends the setting status query request. Duration of the timer of the client may be set as required. This is not limited in this application.

**Step 380: The storage server receives the setting status query request sent by the client.**

The storage server determines whether the task identifier included in the setting status query request is the same as a task identifier stored in the storage server. If the task identifier included in the setting status query request is the same as the task identifier stored in the storage server, the storage server queries the file attribute setting task indicated by the task identifier, and sends a setting status query response, that is, performs step 390.

If the task identifier included in the setting status query request is different from the task identifier stored in the storage server, the storage server feeds back, to the client, the error code NFS4ERR_BAD_STATEID or the error code of Setattr defined in NFSv4.2.

Optionally, the setting status query request also includes the verification code.

The storage server may further verify the task identifier based on the verification code. When the verification of the task identifier succeeds based on the verification code, the setting status query response is sent, that is, step 390 is performed.

When the verification of the task identifier fails based on the verification code, it indicates that the storage server may encounter an error during the setting of the file attributes of the plurality of files, and step 3110 is performed to send the error code.

For example, the verification code is the receiving time of the setting request received by the storage server. The setting status query request includes the task identifier and the verification code. If the storage server determines that the task identifier included in the setting status query request is the same as the task identifier stored in the storage server and that the verification code included in the setting status query request is the same as the receiving time of the setting request stored in the storage server, it is determined that the verification succeeds.

For another example, if the storage server determines that the task identifier included in the setting status query request is the same as the task identifier stored in the storage server and that the verification code included in the setting status query request is different from the receiving time of the setting request stored in the storage server, it is determined that the verification fails. In this case, the storage server sends the error code, that is, performs step 3110. The error code is NFS4ERR_BAD_STATEID or the error code of Setattr defined in NFSv4.2.

For another example, if the storage server determines that the task identifier included in the setting status query request is different from the task identifier stored in the storage server and that the verification code included in the setting status query request is different from the receiving time of the setting request stored in the storage server, it is determined that the verification fails, and the storage server discards the setting status query request.

**Step 390: The storage server sends the setting status query response.**

The setting status query response indicates the setting result for setting the file attributes of the plurality of files based on the setting request. The setting status query response indicates any one of success, failure, or a requery.

If the storage server completes the setting of the file attributes of the plurality of files, the setting result indicates success or failure. If the storage server does not complete the setting of the file attributes of the plurality of files, the setting result indicates a requery. Therefore, the client may release a slot for the file attribute setting task between the client and the storage server, so that the client establishes a connection to the storage server for another task by using the released slot, to improve network resource utilization.

**Step 3100: The client receives the setting status query response sent by the storage server.**

If the setting result indicates the success, the client determines that the setting of the file attributes of the plurality of files is completed.

If the setting result indicates the failure, the client may resend the setting request to request the storage server to set the file attributes of the plurality of files.

If the setting result indicates the requery, the client determines that the storage server has not completed the setting of the file attributes of the plurality of files. In this case, the client may wait for the storage server to set the file attributes of the plurality of files, and send the setting status query request again to query the setting status for the file attributes of the plurality of files. That is, the client and the storage server perform step 370 to step 3120 again.

**Step 3110: The storage server sends the error code.**

When the verification of the task identifier fails based on the verification code, it indicates that the storage server may encounter an error during the setting of the file attributes of the plurality of files, and the error code may be NFS4ERR_BAD_STATEID.

**Step 3120: The client receives the error code sent by the storage server.**

When receiving the error code or the failure indicated by the setting result, the client determines that the file attributes of the plurality of files are incorrectly set. In this case, the client may resend the setting request to request the storage server to set the file attributes of the plurality of files. Therefore, the client requeries the setting status for the file attributes of the plurality of files to obtain the setting result, to avoid a case that a slot (slot) of a session (session) is always occupied by the storage server and the client, and improve slot utilization.

The following describes sending the setting response by the storage server in an asynchronous manner.

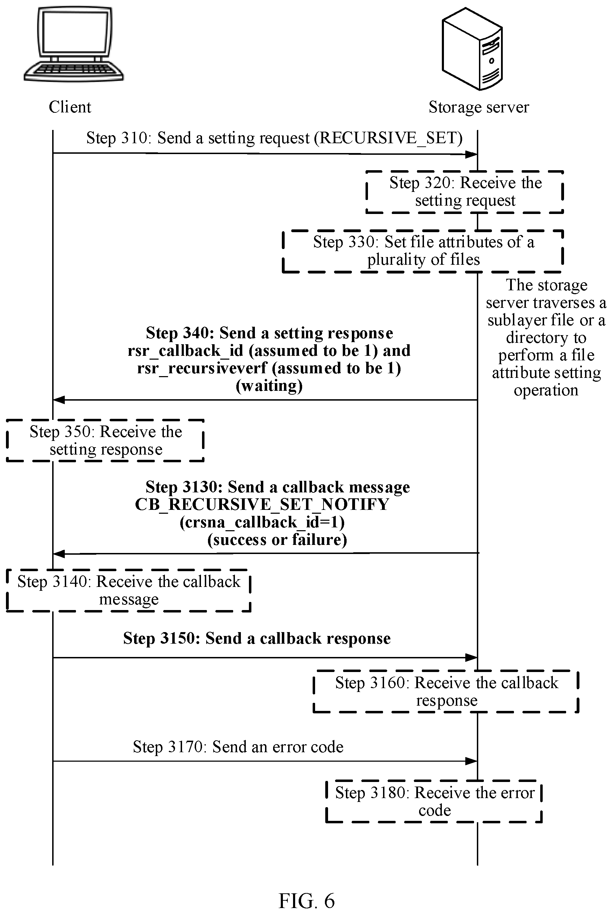

FIG. 6 is a diagram of feeding back a setting response in an asynchronous manner according to this application. A difference from the file attribute setting shown in FIG. 3 lies in that the storage server directly feeds back the setting response without waiting for the setting result for the file attributes of the plurality of files, where the setting result indicates to wait for the storage server to feed back the setting result for the file attributes of the plurality of files. The client starts asynchronous monitoring to monitor the storage server to feed back the setting result. The setting response may include a task identifier and an error code. The task identifier indicates a file attribute setting task executed by the storage server based on a setting request. Optionally, the setting response may further include a verification code, and the verification code may be determined based on sending time of the setting request. For example, the task identifier may be rsr_callback_id, the error code may be NFS4_PENDING, and the verification code may be rsr_recursiveverf. When rsr_callback_id=1, rsr_recursiveverf=1, and the error code is NFS4_OK or PENDING, it indicates that the storage server indicates the client to wait for the storage server to feed back the setting result for the file attributes of the plurality of files.

A difference from the file attribute setting shown in FIG. 5b lies in that the client does not need to send a setting status query request, that is, does not need to perform step 370 to step 3120. The client asynchronously monitors the setting result fed back by the storage server. As shown in FIG. 6, the foregoing method procedure further includes the following step 3130 to step 3180.

**Step 3130: The storage server sends a callback message.**

The storage server completes the setting of the file attributes of the plurality of files, and sends the callback message. The callback message includes the task identifier and the setting result. The task identifier indicates the file attribute setting task executed by the storage server based on the setting request. The setting result includes either success or failure.

If the storage server succeeds in setting the file attributes of the plurality of files, the setting result indicates the success. If the storage server fails to set the file attributes of the plurality of files, the setting result indicates the failure.

**Step 3140: The client receives the callback message sent by the storage server.**

The client determines whether the task identifier included in the callback message is the same as a task identifier stored in the client. If the task identifier included in the callback message is the same as the task identifier stored in the client, the client determines success or failure based on the setting result, and sends a callback response, that is, performs step 3150.

When the client receives the callback message, if the setting result indicates the failure, the client determines that the file attributes of the plurality of files are incorrectly set. In this case, the client may resend the setting request to request the storage server to set the file attributes of the plurality of files.

Optionally, the callback message may also include a verification code.

The client may further verify the task identifier based on the verification code. When the verification of the task identifier succeeds based on the verification code, the callback response is sent, that is, step 3150 is performed.

When the verification of the task identifier fails based on the verification code, step 3170 is performed to send the error code.

For example, the verification code is sending time of the setting request sent by the client. The callback message includes the task identifier and the verification code. If the client determines that the task identifier included in the callback message is the same as the task identifier stored in the client and that the verification code included in the callback message is the same as the sending time of the setting request stored in the client, it is determined that the verification succeeds, that is, performs step 3150.

For another example, if the client determines that the task identifier included in the callback message is the same as the task identifier stored in the client and that the verification code included in the callback message is different from receiving time of the setting request stored in the client, it is determined that the verification fails. In this case, the client sends the error code, and terminates the file attribute setting task indicated by the task identifier, that is, performs step 3170. For another example, if the client determines that the task identifier included in the callback message is different from the task identifier stored in the client and that the verification code included in the callback message is different from receiving time of the setting request stored in the client, it is determined that the verification fails, and the client discards the callback message. **Step 3150: The client sends the callback response.**

**Step 3160: The storage server receives the callback response sent by the client.**

The callback response indicates a callback success or a callback failure.

**Step 3170: The client sends the error code.**

When the verification of the task identifier fails based on the verification code, the error code sent by the client may be NFS4ERR_BAD_STATEID.

**Step 3180: The storage server receives the error code sent by the client.**

Optionally, the storage server may cancel the file attribute setting task, and discard the setting result for the file attributes.

Therefore, the client asynchronously monitors the setting result to obtain the setting result, to avoid a case that a slot (slot) of a session (session) is always occupied by the storage server and the client, and improve slot utilization.

The following describes the synchronous manner and the asynchronous manner with reference to Table 1.

**Table 1**

| Manner of feeding back the setting response by the storage server | Storage server | Command |
|---|---|---|
| | Receive the setting request and send the setting response (success, failure, or waiting) | Setting request: rsa_sync=true or rsa_sync=false |
| Synchronous manner | When the timer does not expire, send the setting response (success or failure) | Setting response: NFS4_OK+ID |
| | | For example, ID (rsr_callback_id=0 rsr_recursiveverf=0) |
| | Step 1: When the timer expires, send the setting response (wait) | Setting response: NFS4_OK+ID or PENDING+ID |
| | Step 2: Receive the setting status query request sent by the client | For example, ID (rsr_callback_id=1 rsr_recursiveverf=1) |
| | | Setting status query request: |
| Manner of feeding back the setting response by the storage server | Storage server | Command |
| | Receive the setting request and send the setting response (success, failure, or waiting) | Setting request: rsa_sync=true or rsa_sync=false |
| | Step 3: **Send the setting status query response (success, failure, or waiting)** | rssa_stateid=callback_id |
| | | Setting status query response: NFS4_OK, PENDING, or error code |
| Asynchronous manner | Step 1: Send the setting response (wait) | Setting response: NFS4_OK+ID or PENDING+ID |
| | Step 2: **Send the callback message (success or failure) to the client** and receive the callback response | For example, ID (rsr_callback_id=1 rsr_recursiveverf=1) |
| | | Callback message: NFS4_OK or error code |

It can be learned from Table 1 that, when the storage server feeds back the setting response in the synchronous manner, if the timer does not expire, the setting response sent by the storage server to the client indicates the success or the failure; if the timer expires, the setting response sent by the storage server to the client indicates the waiting; and further, the storage server receives the setting status query request sent by the client, and sends the setting status query response for indicating the success, the failure, or the waiting. When the storage server feeds back the setting response in the asynchronous manner, the setting response sent by the storage server to the client indicates the waiting; and further, the storage server sends the callback message to the client for indicating the success or the failure, and receives the callback response.

In another possible implementation, if duration for the client to wait for the storage server to feed back the setting response is long, the client may actively cancel the file attribute setting task, and a started setting task is forcibly terminated as a session is destroyed.

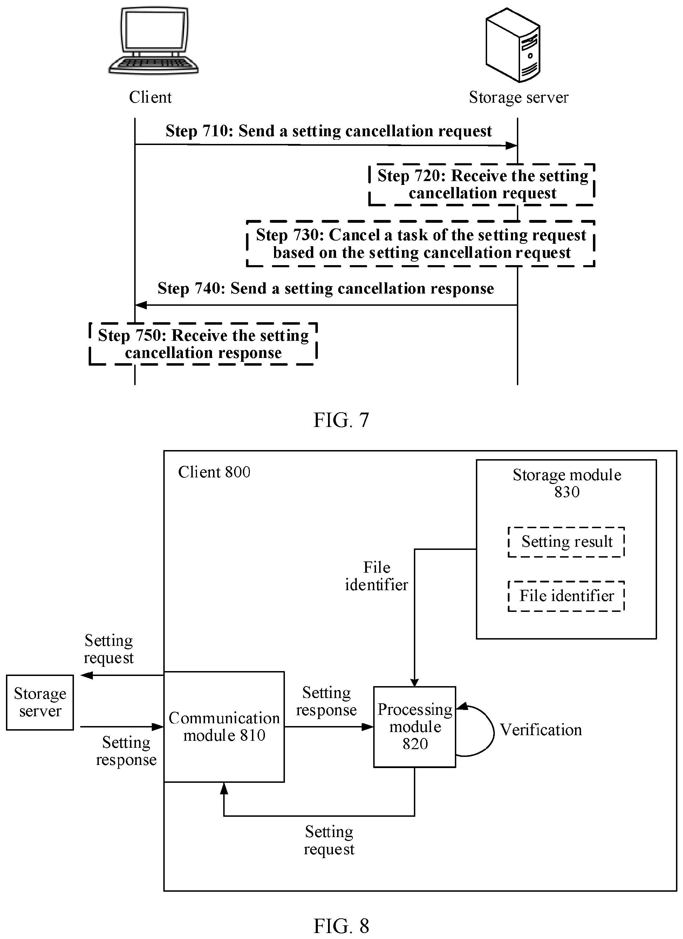

FIG. 7 is a diagram of canceling file attribute setting according to this application. As shown in FIG. 7, the foregoing method procedure further includes the following step 710 to step 750.

**Step 710: The client sends a setting cancellation request.**

In some embodiments, when the storage server feeds back the setting response in the first possible implementation in the synchronous manner, the storage server may spend a long time in performing file attribute setting due to a large quantity of files, so that the storage server cannot feed back the setting response in a timely manner. In this case, the client may send the setting cancellation request to the storage server.

In some other embodiments, when the client receives the callback message, and the verification of the task identifier fails, as described in step 3140, the client may send the setting cancellation request to the storage server.

The setting cancellation request indicates to cancel a task corresponding to the setting request. The setting cancellation request may include the task identifier.

**Step 720: The storage server receives the setting cancellation request sent by the client.**

**Step 730: The storage server cancels, based on the setting cancellation request, the task corresponding to the setting request.**

The storage server terminates a file attribute setting task indicated by the task identifier included in the setting cancellation request. The storage server terminates setting of the file attributes of the plurality of files.

In some embodiments, the storage server may have set a file attribute of a part of the plurality of files, and cancel, based on the setting cancellation request, the task corresponding to the setting request. Canceling the task corresponding to the setting request may refer to stopping continuing to execute the setting task of the file attributes of the plurality of files, and not continuing to perform attribute setting on a file whose attribute has not been set.

**Step 740: The storage server sends a setting cancellation response.**

**Step 750: The client receives the setting cancellation response sent by the storage server.** The setting cancellation response indicates cancellation success or cancellation failure. If the storage server completes the setting of the file attributes of the plurality of files, the error code NFS4_OK is returned.

In this way, if the client waits for a long time for the storage server to respond to the setting result, the client may actively send the setting cancellation request, and the storage server cancels the setting of the file attributes of the plurality of files, to avoid a waste of resources caused by occupying a slot of a session by the client and the storage server for a long time. After canceling the setting of the file attributes, the client may further re-initiate the setting request for the file attributes, to indicate the storage server to re-perform the setting of the file attributes.

The following describes, by using examples, commands (or operations) related to the file attribute setting provided in this application.

### 1. Operation 1: RECURSIVE_SET: Recursively set attributes of a directory and subitems of the directory

### Parameter definition:

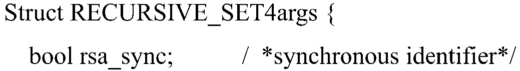

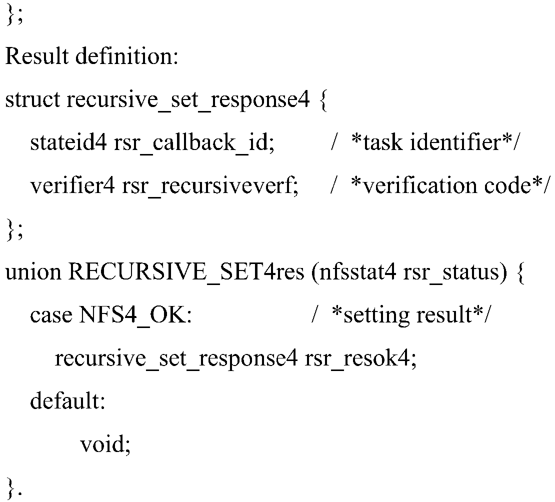

The RECURSIVE_SET operation is used by the client to indicate the storage server to set file attributes of a file and multi-level subfiles in the file. RECURSIVE_SET may be set in, after, or before a Setattr operation.

The storage server receives the Setattr operation. If the Setattr operation does not include the RECURSIVE_SET operation, the storage server performs file attribute setting based on the Setattr operation.

If the Setattr operation includes the RECURSIVE_SET operation, the storage server determines to recursively set the file attributes of the file and the multi-level subfiles in the file.

If the storage server completes the setting of the file attributes, and the file attributes are successfully set, a value of rsr_callback_id may be 0, and a value of rsr_recursiversr_recursiveverf may be 0.

If identifying that the values of rsr_callback_id and rsr_recursiversr_recursiveverf are both 0, the client determines that the storage server completes the setting of the file attributes. If the storage server succeeds in setting the file attributes of the plurality of files, and a setting result includes success parameter NFS4_OK, the client determines, based on the success parameter, that the file attributes is successfully set. If the storage server fails to set the file attributes of the plurality of files, and a setting result includes failure parameter, the client determines, based on the success parameter, that the file attributes fail to be set.

If the storage server does not complete the setting of the file attributes, the value of rsr_callback_id may be a non-zero value, and the value of rsr_recursiversr_recursiveverf may be a non-zero value. For example, the values of rsr_callback_id and rsr_recursiversr_recursiveverf are both 1.

If identifying that the values of rsr_callback_id and rsr_recursiversr_recursiveverf are both 1, the client determines that the storage server does not complete the setting of the file attributes. It is determined, based on NFS4_OK, that the file attributes are correctly.

The foregoing meanings of the values of rsr_callback_id and rsr_recursiversr_recursiveverf are merely examples for description. This is not limited in this application. In an actual application, the values of rsr_callback_id and rsr_recursiversr_recursiveverf may alternatively be other values. In addition, when a value of rsa_sync is true, it indicates that the storage server sends the setting response in the synchronous manner.
(1) The client waits for the storage server to feed back the setting response. Until the storage server completes the setting of the file attributes of the plurality of files, and obtains the setting result, the client receives the setting response sent by the storage server.
(2) The storage server may feed back the setting response based on a timer. When the timer does not expire, and the storage server obtains the setting result, the storage server sends the setting response to the client. The values of rsr_callback_id and rsr_recursiversr_recursiveverf are both 0. The client determines, based on the success parameter, that the file attributes are successfully set, or the client determines, based on the success parameter, that the file attributes fail to be set. When the timer expires, and the storage server does not complete the setting of the file attributes of the plurality of files, the storage server sends the setting response to the client. The setting response includes an error code NFS4ERR_PENDING, and rsr_callback_id and rsr_recursiversr_recursiveverf whose values are both 1. The client determines to perform a requery or waiting based on rsr_callback_id, rsr_recursiversr_recursiveverf, and the error code NFS4ERR_PENDING.

After a period of time, the client executes an operation 2 to query execution progress of the file attribute setting. If receiving the error code NFS4ERR_PENDING again, the client executes the operation 2 again to query the execution progress of the file attribute setting.

### 2. Operation 2: RECURSIVE_SET_STATUS: Query a setting result for the recursively set attributes of the directory and the subitems of the directory

### Parameter definition:

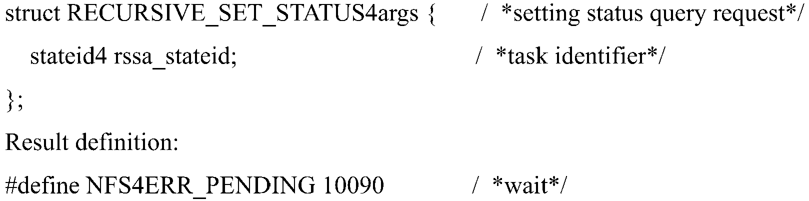

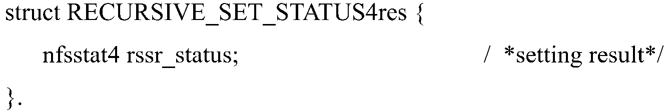

The RECURSIVE_SET_STATUS operation is used by the client to query a status of a recursive setting task (the attributes of the directory and the subitems of the directory).

If the storage server completes the setting of the attributes of the directory and the subitems of the directory, NFS4_OK is returned. For example, a value of rssr_status is NFS4_OK.

If the storage server encounters any error during the setting of the attributes of the directory and the subitems of the directory, the error code is returned. The error code is not extended or modified in this application, and the error code is consistent with an error code that may occur in the Setattr operation.

If the storage server does not complete the setting of the attributes of the directory and the subitems of the directory, NFS4_PENDING is returned. For example, a value of rssr_status is NFS4_PENDING.

### 3. Operation 3: RECURSIVE_SET_CANCEL: The client cancels the file attribute setting task

### Parameter definition:

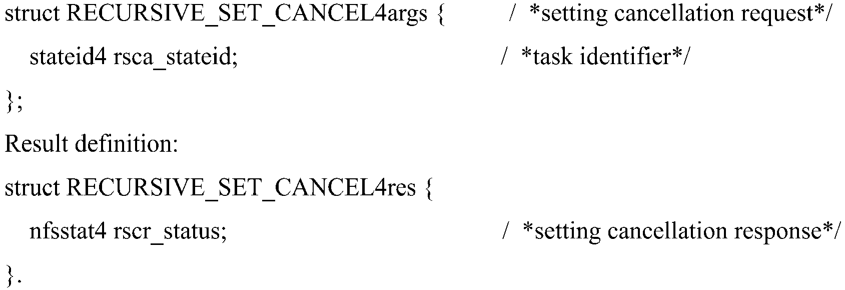

When needing to cancel the file attribute setting task, the client may send the RECURSIVE_SET_CANCEL operation. A value of rsca_stateid may be a task identifier of a task that needs to be canceled.

A value of rsc_stateid is from a response packet of RECURSIVE_SET, for example, a task identifier included in a setting status query response.

If the storage server fails to cancel the task, NFS4ERR_DELAY is returned, and a value of rscr_status is NFS4ERR_DELAY. After canceling failure response, the client delays resending of the setting request.

If the storage server completes the setting of the attributes of the directory and the subitems of the directory, NFS4_OK is returned, and a value of rscr_status is NFS4_OK.

### 4. Operation 4: CB_RECURSIVE_SET_NOTIFY: Callback a result of the task of the recursively set attributes of the directory and the subitems of the directory (for asynchronization and from the server to the client)

### Parameter definition:

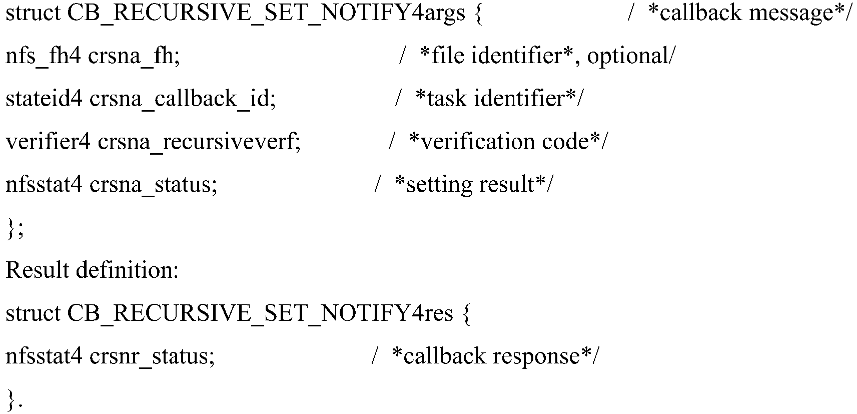

The CB_RECURSIVE_SET_NOTIFY operation is used by the storage server to call back the client, to be specific, the storage server notifies the client of the setting result for the recursively set attributes of the directory and the subitems of the directory.

If the storage server completes the setting of the attributes of the directory and the subitems of the directory, NFS4_OK is returned, and a value of crsnr_status is NFS4_OK.

If the storage server encounters any error during the setting of the attributes of the directory and the subitems of the directory, the error code is returned. The error code is not extended or modified in this application, and the error code is consistent with the error code that may occur in the Setattr operation.

It may be understood that, to implement functions in the foregoing embodiments, the client and the server (for example, the storage server) include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed in a manner of hardware or by driving hardware by computer software depends on particular application scenarios and design constraints of the technical solutions.

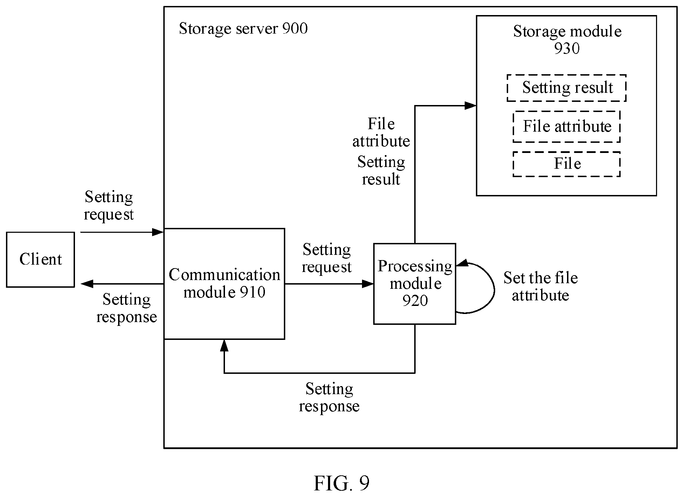

The foregoing describes in detail a lock acquisition method and a lock restoration method provided in this application with reference to FIG. 1 to FIG. 7. The following describes apparatuses provided in this application with reference to FIG. 8 and FIG. 9. These apparatuses may be configured to implement functions of the client or the storage server in the foregoing method embodiments, and therefore can also implement beneficial effects of the foregoing method embodiments. In embodiments, the apparatuses may be the devices shown in FIG. 3, FIG. 5a and FIG. 5b, FIG. 6, or FIG. 7, or may be modules (for example, chips) used in a server or modules (for example, chips) used in a client.

As shown in FIG. 8, a client 800 includes a communication module 810, a processing module 820, and a storage module 830. The client 800 is configured to implement a function of the client in the method embodiment shown in FIG. 3, FIG. 5a and FIG. 5b, FIG. 6, or FIG. 7.

The communication module 810 is configured to send a setting request, where the setting request indicates to set file attributes of a plurality of files. For example, the communication module 810 is configured to perform step 310 in FIG. 3.

The communication module 810 is further configured to receive a setting response, where the setting response indicates a setting result for the file attributes of the plurality of files based on the setting request. For example, the communication module 810 is configured to perform step 350 in FIG. 3.

Optionally, the communication module 810 is further configured to send a setting status query request, where the setting status query request includes a task identifier. For example, the communication module 810 is configured to perform step 370 in FIG. 5b.

Optionally, the communication module 810 is further configured to receive a setting status query response, where the setting status query response indicates the setting result for setting the file attributes of the plurality of files based on the setting request. For example, the communication module 810 is configured to perform step 3100 in FIG. 5b.

Optionally, the communication module 810 is further configured to receive a callback message, where the callback message includes the task identifier and the setting result, and the setting result includes either success or failure. For example, the communication module 810 is configured to perform step 3140 in FIG. 6.

Optionally, the communication module 810 is further configured to send a callback response, where the callback response indicates a callback success or a callback failure. For example, the communication module 810 is configured to perform step 3150 in FIG. 6.

Optionally, the processing module 820 is configured to verify the task identifier.

Optionally, the communication module 810 is further configured to send a setting cancellation request, where the setting cancellation request indicates to cancel a task corresponding to the setting request. For example, the communication module 810 is configured to perform step 710 in FIG. 7.

Optionally, the communication module 810 is further configured to receive a setting cancellation response, where the setting cancellation response indicates cancellation success or cancellation failure. For example, the communication module 810 is configured to perform step 750 in FIG. 7. The storage module 830 is configured to store the setting result and the file identifier, so that the client queries performing progress of file attribute setting when waiting for a server to perform file attribute setting.

As shown in FIG. 9, a storage server 900 includes a communication module 910, a processing module 920, and a storage module 930. The storage server 900 is configured to implement a function of the storage server in the method embodiment shown in FIG. 3, FIG. 5a and FIG. 5b, FIG. 6, or FIG. 7.

The communication module 910 is configured to receive a setting request, where the setting request indicates to set file attributes of a plurality of files. For example, the communication module 910 is configured to perform step 320 in FIG. 3.

The communication module 910 is further configured to send a setting response, where the setting response indicates a setting result for the file attributes of the plurality of files based on the setting request. For example, the communication module 910 is configured to perform step 340 in FIG. 3. The processing module 920 is configured to set the file attributes of the plurality of files based on the setting request. For example, the processing module 920 is configured to perform step 330 in FIG. 3.

Optionally, the communication module 910 is further configured to receive a setting status query request, where the setting status query request includes a task identifier. For example, the communication module 910 is configured to perform step 390 in FIG. 5b.

Optionally, the communication module 910 is further configured to send a setting status query response, where the setting status query response indicates the setting result for setting the file attributes of the plurality of files based on the setting request. For example, the communication module 910 is configured to perform step 390 in FIG. 5b.

Optionally, the communication module 910 is further configured to send a callback message, where the callback message includes the task identifier and the setting result, and the setting result includes either success or failure. For example, the communication module 910 is configured to perform step 3130 in FIG. 6.

Optionally, the communication module 910 is further configured to receive a callback response, where the callback response indicates a callback success or a callback failure. For example, the communication module 910 is configured to perform step 3160 in FIG. 6.

Optionally, the processing module 920 is configured to verify the task identifier.

Optionally, the communication module 910 is further configured to receive a setting cancellation request, where the setting cancellation request indicates to cancel a task corresponding to the setting request. For example, the communication module 910 is configured to perform step 720 in FIG. 7.

Optionally, the communication module 910 is further configured to send a setting cancellation response, where the setting cancellation response indicates cancellation success or cancellation failure. For example, the communication module 910 is configured to perform step 740 in FIG. 7. The processing module 920 is configured to cancel, based on the setting cancellation request, the task corresponding to the setting request. For example, the processing module 920 is configured to perform step 730 in FIG. 7.

The storage module 930 is configured to store a file, a file attribute, and a setting result, so that a server feeds back the setting result to a client.

It should be understood that, the client 800 and the storage server 900 in embodiments of this application may be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, when the method shown in FIG. 3, FIG. 5a and FIG. 5b, FIG. 6, or FIG. 7 may be implemented by using software, modules thereof may also be software modules, and the client 800, the storage server 900, and modules thereof may also be software modules.

The client 800 and the storage server 900 according to embodiments of this application may correspondingly perform methods described in embodiments of this application, and the foregoing and other operations and/or functions of units in the client 800 and the storage server 900 are respectively configured to implement corresponding procedures of each method in FIG. 3, FIG. 5a and FIG. 5b, FIG. 6, or FIG. 7. For brevity, details are not described herein again.

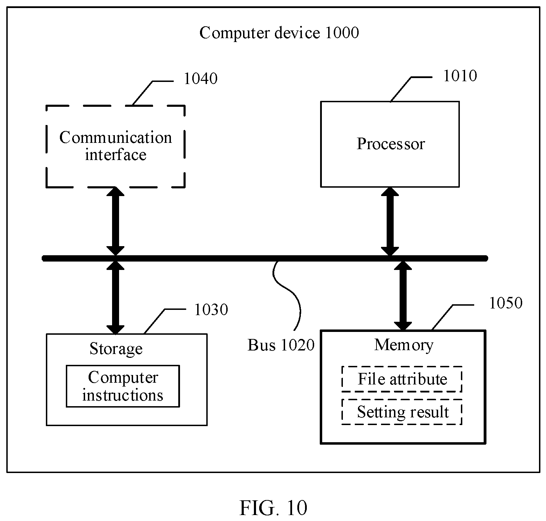

FIG. 10 is a diagram of a structure of a computer device 1000 according to this application. As shown in FIG. 10, the computer device 1000 includes a processor 1010, a bus 1020, a storage 1030, a communication interface 1040, and a memory 1050 (which may also be referred to as a main memory (main memory) unit). The processor 1010, the storage 1030, the memory 1050, and the communication interface 1040 are connected through the bus 1020.

It should be understood that, in this embodiment, the processor 1010 may be a CPU, or the processor 1010 may be another general-purpose processor, a digital signal processor (DSP), an ASIC, an FPGA or another programmable logic device, a discrete gate or a transistor logic device, a discrete hardware component, or the like. The general-purpose processor may be a microprocessor, any conventional processor, or the like.

Alternatively, the processor may be a graphics processing unit GPU), a neural-network processing unit (NPU), a microprocessor, an ASIC, or one or more integrated circuits configured to control program execution in the solutions of this application.

The communication interface 1040 is configured to implement communication between the computer device 1000 and an external device or a component. In this application, when the computer device 1000 is configured to implement functions of the client shown in FIG. 3, FIG. 5a and FIG. 5b, FIG. 6, or FIG. 7, the communication interface 1040 is configured to send a setting request. When the computer device 1000 is configured to implement functions of the storage server shown in FIG. 3, FIG. 5a and FIG. 5b, FIG. 6, or FIG. 7, the communication interface 1040 is configured to receive a setting request, so that the processor 1010 sets file attributes of a plurality of files based on the setting request.

The bus 1020 may include a path, configured to transfer information between the foregoing components (for example, the processor 1010, the memory 1050, and the storage 1030). In addition to a data bus, the bus 1020 may further include a power bus, a control bus, a status signal bus, and the like. However, for clear description, various types of buses are marked as the bus 1020 in the figure. The bus 1020 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) protocol bus, or the like. The bus 1020 may be classified into an address bus, a data bus, a control bus, and the like.

In an example, the computer device 1000 may include a plurality of processors. The processor may be a multi-core (multi-CPU) processor. The processor herein may be one or more devices, circuits, and/or compute units configured to process data (for example, computer program instructions). It should be noted that, FIG. 10 merely uses an example in which the computer device 1000 includes one processor 1010 and one storage 1030. Herein, the processor 1010 and the storage 1030 each indicate a type of component or device. In a specific embodiment, a quantity of components or devices of each type may be determined based on a service requirement.

The memory 1050 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 1050 is configured to store a file attribute, a setting result, and the like.

The storage 1030 may be corresponding to a storage medium that is configured to store information such as a file, a file attribute, and a setting result in the foregoing method embodiments, for example, a magnetic disk such as a hard disk drive or a solid-state drive.

The computer device 1000 may be a general-purpose device or a dedicated device. For example, the computer device 1000 may be an edge device (for example, a box carrying a chip having a processing capability), or the like. Optionally, the computer device 1000 may alternatively be a server or another device having a computational capability.

It should be understood that the computer device 1000 according to embodiments may correspond to the client 800 and the storage server 900 in embodiments, and may correspond to a corresponding body in any method in FIG. 3, FIG. 5a and FIG. 5b, FIG. 6, or FIG. 7. In addition, the foregoing and other operations and/or functions of modules in the client 800 and the storage server 900 are respectively configured to implement corresponding procedures of each method in FIG. 3, FIG. 5a and FIG. 5b, FIG. 6, or FIG. 7. For brevity, details are not described herein again. The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. In an example, the storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a compute device. Certainly, the processor and the storage medium may alternatively exist in the compute device as discrete components.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A file attribute setting method, comprising:
sending a setting request to a storage system, wherein the setting request is used to set file attributes of a plurality of files; and
receiving a setting response, wherein the setting response indicates a setting result for the file attributes of the plurality of files based on the setting request.

2. The method according to claim 1, wherein the setting request comprises a recursively setting parameter, and the recursively setting parameter indicates to set a file attribute of the first file and file attributes of multi-level subfiles comprised in the first file.

3. The method according to claim 1 or 2, wherein the setting request comprises a file identifier of the first file among the plurality of files.

4. The method according to any one of claims 1 to 3, wherein the setting result indicates success or failure.

5. The method according to any one of claims 1 to 3, wherein the setting result indicates a requery.

6. The method according to claim 5, wherein the setting request comprises a synchronous identifier; the synchronous identifier indicates the storage system to feed back the setting response in a synchronous manner; the setting response comprises a task identifier and a first error code, wherein the first error code indicates a requery; and
after the receiving the setting response, the method further comprises:
sending a setting status query request, wherein the setting status query request comprises the task identifier; and
receiving a setting status query response, wherein the setting status query response indicates the setting result for the file attributes of the plurality of files based on the setting request.

7. The method according to any one of claims 1 to 3, wherein the setting result indicates to wait for a setting result fed back by the storage system.

8. The method according to claim 7, wherein the setting request comprises an asynchronous identifier; the asynchronous identifier indicates the storage system to feed back the setting response in an asynchronous manner; the setting response comprises a task identifier and a first error code, wherein the first error code indicates waiting; and
after the receiving the setting response, the method further comprises:
receiving a callback message, wherein the callback message comprises the task identifier and the setting result for the file attributes of the plurality of files, and the setting result comprises either success or failure; and
sending a callback response.

9. The method according to claim 8, wherein the callback message further comprises a verification code; and
the sending the callback response comprises:
when verification of the task identifier succeeds based on the verification code, sending the callback response; and
after the receiving the callback message, the method further comprises:
when verification of the task identifier fails based on the verification code, sending a second error code.

10. The method according to any one of claims 5 to 9, wherein the method further comprises:
sending a setting cancellation request to the storage system, wherein the setting cancellation request indicates to cancel a task corresponding to the setting request; and
receiving a setting cancellation response sent by the storage system, wherein the setting cancellation response indicates cancellation success or cancellation failure.

11. The method according to claim 6 or 8, wherein the setting response comprises the task identifier and a first error code NFS4_OK; or the setting response comprises the task identifier and a first error code PENDING.

12. A file attribute setting method, comprising:
receiving, by a storage system, a setting request, wherein the setting request is used to set file attributes of a plurality of files;
setting the file attributes of the plurality of files based on the setting request; and
sending a setting response, wherein the setting response indicates setting result for the file attributes of the plurality of files based on the setting request.

13. The method according to claim 12, wherein the setting the file attributes of the plurality of files based on the setting request specifically comprises:
querying all subfiles in the files; and
setting all found subfiles based on the file attributes.

14. The method according to claim 12 or 13, wherein the setting request comprises a recursively setting parameter and a file identifier of a first file among the plurality of files, and the recursively setting parameter indicates to set a file attribute of the first file and file attributes of multi-level subfiles comprised in the first file.

15. The method according to any one of claims 12 to 14, wherein the setting request comprises a synchronous identifier; and the synchronous identifier indicates the storage system to feed back the setting response in a synchronous manner; and
the sending the setting response comprises:
when a timer does not expire, sending the setting response, wherein the setting response indicates success or failure in setting the file attributes of the plurality of files based on the setting request.

16. The method according to any one of claims 12 to 14, wherein the setting request comprises the synchronous identifier; and
the sending the setting response comprises:
when a timer expires, sending the setting response, wherein the setting response indicates to requery the setting result for the file attributes of the plurality of files based on the setting request.

17. The method according to claim 16, wherein the setting response comprises a task identifier and a first error code, wherein the first error code indicates a requery; and
after the sending the setting response, the method further comprises:
receiving a setting status query request, wherein the setting status query request comprises the task identifier; and
sending a setting status query response, wherein the setting status query response indicates the setting result for the file attributes of the plurality of files based on the setting request.

18. The method according to claim 17, wherein the setting status query request further comprises a verification code; and
the sending the setting status query response comprises:
when verification of the task identifier succeeds based on the verification code, sending the setting status query response; and
the method further comprises:
when verification of the task identifier fails based on the verification code, sending a second error code.

19. The method according to any one of claims 12 to 14, wherein the setting request comprises an asynchronous identifier; the asynchronous identifier indicates the storage system to feed back the setting response in an asynchronous manner; the setting response indicates to wait for the setting result for the file attributes of the plurality of files based on the setting request; and the setting response comprises a task identifier and a first error code, wherein the first error code indicates waiting; and
after the sending the setting response, the method further comprises:
sending a callback message, wherein the callback message comprises the task identifier and the setting result for the file attributes of the plurality of files, and the setting result comprises either success or failure; and
receiving a callback response.

20. The method according to any one of claims 16 to 19, wherein the method further comprises:
receiving a setting cancellation request, wherein the setting cancellation request indicates to cancel a task corresponding to the setting request;
canceling, based on the setting cancellation request, the task corresponding to the setting request; and
sending a setting cancellation response, wherein the setting cancellation response indicates cancellation success or cancellation failure.

21. The method according to claim 17 or 19, wherein the setting response comprises the task identifier and a first error code NFS4_OK; or the setting response comprises the task identifier and a first error code PENDING.

22. A client, wherein the client comprises a module for performing operation steps of the method in any one of claims 1 to 11.

23. A storage server, wherein the storage server comprises a module for performing operation steps of the method in any one of claims 12 to 21.

24. A computer device, wherein the computer device comprises a memory and a processor, the memory is configured to store a group of computer instructions; and when executing the group of computer instructions, the processor performs operation steps of the method in any one of claims 1 to 11 or operation steps of the method in any one of claims 12 to 21.

25. A communication system, wherein the communication system comprises a client and a plurality of storage servers, the client mounts the plurality of storage servers, the client is configured to perform operation steps of the method in any one of claims 1 to 11, and the storage server is configured to perform operation steps of the method in any one of claims 12 to 21.
